# EUROPÄISCHE PATENTSCHRIFT

(11) **EP 2 809 897 B1**
(45) Veröffentlichungstag und Bekanntmachung des Hinweises auf die Patenterteilung: **31.10.2018**
(21) Anmeldenummer: 13703008.6
(22) Anmeldetag: 01.02.2013
(51) Int. Cl.: F01N 3/20

(54) **DOSIERVENTIL FÜR EINFRIERGEFÄHRDETE ADDITIVE**
DOSING VALVE FOR ADDITIVES AT RISK OF FREEZING
VANNE DE DOSAGE POUR ADDITIFS CRAIGNANT LE GEL

(30) Priorität: 03.02.2012 DE 102012002061
(43) Veröffentlichungstag der Anmeldung: 10.12.2014
(73) Patentinhaber: Continental Automotive GmbH, 30165 Hannover (DE)
(72) Erfinder: HODGSON, Jan, 53840 Troisdorf (DE); SCHEPERS, Sven, 53844 Troisdorf (DE); BRÜCK, Rolf, 51429 Bergisch Gladbach (DE)
(86) Internationale Anmeldenummer: PCT/EP2013/052043
(87) Internationale Veröffentlichungsnummer: WO 2013/113881

(56) Entgegenhaltungen:
- EP-A1- 1 314 864
- EP-A1- 1 467 086
- WO-A1-02/10583
- DE-A1-102010 012 651
- DE-A1-102010 030 925

## Beschreibung

Die Erfindung betrifft ein Verfahren zum Herstellen eines Reduktionsmitteldosierventils für eine Abgashandlungsvorrichtung und ein Reduktionsmitteldosierventil für eine Abgasbehandlungsvorrichtung. Ein derartiges Dosierventil kann verwendet werden, um eine Flüssigkeit aus einem unter Druck stehenden Speicher zu dosieren.
Das Dosierventil ist insbesondere geeignet, um ein einfriergefährdetes flüssiges Additiv zu dosieren. Ein solches einfriergefährdetes flüssiges Additiv ist beispielsweise Harnstoff-Wasser-Lösung. Harnstoff-Wasser-Lösung wird regelmäßig zur Abgasreinigung in Abgasbehandlungsvorrichtungen im Kraftfahrzeugbereich eingesetzt. In Kraftfahrzeugen wird in Abgasbehandlungsvorrichtungen zur Reinigung der Abgase von Verbrennungskraftmaschinen in letzter Zeit vermehrt das SCR-Verfahren [SCR=Selective Catalytic Reduction] angewendet. Bei diesem Verfahren werden Stickstoffoxidverbindungen im Abgas zu unschädlichen Substanzen reduziert. Dazu wird der Abgasbehandlungsvorrichtung Harnstoff-Wasser-Lösung als Reduktionsmittelvorläufer bzw. Ammoniak als Reduktionsmittel zugeführt. Die Harnstoff-Wasser-Lösung wird thermolytisch (durch hohe Temperaturen) und/oder hydrolytisch (unterstützt durch einen Katalysator) zu Ammoniak umgesetzt. Die Stickstoffoxidverbindungen im Abgas reagieren mit dem Ammoniak zu unschädlichen Substanzen (insbesondere zu CO₂, Wasser und Stickstoff). Das Additiv ist beispielsweise Harnstoff-Wasser-Lösung.

Für die Abgasreinigung ist eine 32,5 prozentige Harnstoff-Wasser-Lösung verbreitet, welche unter dem Handelsnamen AdBlue® erhältlich ist. Diese Harnstoff-Wasser-Lösung friert bei -11 °C ein. Derart niedrige Temperaturen können im Kraftfahrzeugbereich insbesondere während langer Stillstandszeiten auftreten.
Ein SCR-Dosiersystem kann so ausgeführt sein, dass in einem Dosierventil zur Dosierung von flüssigem Additiv auch während dieser Stillstandszeiten das flüssige Additiv vorliegt. Das SCR-Dosiersystem wird also im Abstellfall nicht entleert. Das SCR-Dosiersystem muss daher so ausgestaltet sein, dass es durch Einfrieren des Reduktionsmittels nicht zerstört wird. Gleichzeitig sollten gleichwohl alle Komponenten des SCR-Dosiersystems, insbesondere das Dosierventil, möglichst kostengünstig sein.

Aus den EP1467086A1 und DE102010012651A1 sind bereits Dosierventile bekannt, bei welcher ein Kalibrierkörper durch eine Pressverbindung befestigt ist.

Es ist Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhaftes Dosierventil vorgestellt werden, welches einfrierbeständig ist. Weiter soll ein Verfahren zur Herstellung eines derartigen Dosierventils angegeben werden.
Diese Aufgaben werden gelöst mit Dosierventilen gemäß den unabhängigen Patentansprüchen 1 und 7 sowie mit einem Verfahren zur Herstellung eines Dosierventils gemäß dem unabhängigen Patentanspruch 8. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Reduktionsmitteldosierventil weist zumindest ein Ventilgehäuse mit einem Kanal und einen Ventilkörper auf, der beweglich ist, um das Dosierventil zu öffnen und zu schließen und eine Feder, welche eine Federkraft auf den Ventilkörper ausübt und den Ventilkörper so in einer Ruhestellung hält, wobei die Feder an mindestens einem Kalibrierkörper abgestützt ist, der Ventilkörper, die Feder und der mindestens eine Kalibrierkörper in dem Kanal angeordnet sind und der mindestens eine Kalibrierkörper zumindest mit einer stoffschlüssigen Verbindung in dem Ventilgehäuse befestigt ist, wenn der Kalibrierkörper zusätzlich zu der stoffschlüssigen Verbindung über eine Pressverbindung mit dem Dosierventil verbunden ist.

Das Dosierventil weist vorzugsweise zumindest einen Einlass auf, durch welchen flüssiges Additiv in das Dosierventil gelangen kann. Außerdem weist das Dosierventil vorzugsweise mindestens einen Auslass auf, durch welchen flüssiges Additiv von dem Dosierventil dosiert abgegeben werden kann. Von dem Einlass zu dem Auslass existiert durch das Dosierventil vorzugsweise ein Strömungsweg, welchem das flüssige Additiv von dem Einlass zu dem Auslass folgen kann und welcher mit dem Ventilkörper verschließbar ist. Dieser Strömungsweg ist im Betrieb des Dosierventils zumindest teilweise mit dem flüssigen Additiv gefüllt. Wenn der Strömungsweg von dem Einlass zu dem Auslass freigegeben werden soll, wird der Ventilkörper bewegt, um das Dosierventil zu öffnen. Der Ventilkörper wird von der Feder in einer Ruhestellung gehalten, indem die Feder auf den Ventilkörper eine Federkraft ausübt. In Ruhestellung ist der Ventilkörper vorzugsweise mit der Feder und der Federkraft gegen einen Anschlag vorgespannt. Die Feder ist gegen mindestens einen Kalibrierkörper abgestützt. Bei der Montage des Dosierventils wird die Position des Kalibrierkörpers individuell festgelegt, um die Federkraft der Feder auf den Ventilkörper genau einzustellen. Die Feder weist typischerweise eine gewisse Fertigungstoleranz auf, so dass die Länge der Feder in verschiedenen Dosierventilen (auch aus einer Fertigungslinie) im entspannten Zustand eine unterschiedliche Länge hat. Durch eine variable Positionierung des mindestens eine Kalibrierkörpers kann die Spannung in der Feder so eingestellt werden, dass die Federkraft bei allen Dosierventilen aus einer Fertigungslinie gleich ist. Der Kalibrierkörper wird dazu vorzugsweise in das Dosierventil mit einer definierten Kraft eingesetzt, welche der Federkraft entspricht. Der eingesetzte Dosierkörper ist dann in der durch die Federkraft und die zum einsetzen verwendete Kraft in einer bestimmten Position angeordnet und wird dort mit Hilfe der stoffschlüssigen Verbindung fixiert.

Der Kanal bildet vorzugsweise zumindest abschnittsweise den Strömungsweg durch das Dosierventil (vorzugsweise von dem zumindest einen Einlass zu dem zumindest einen Auslass) aus. Das Ventilgehäuse ist vorzugsweise als Gussteil ausgeführt, in welches der Kanal eingegossen ist. Es ist auch möglich, dass der Kanal in das Ventilgehäuse hineingebohrt oder hineingefräst ist. Das Ventilgehäuse ist vorzugsweise aus Kunststoff oder aus Metall.

Die von dem Dosierventil dosierte Menge des flüssigen Additivs wird durch die Öffnungszeiträume des Dosierventils bestimmt. Die dosierte Menge ist vorzugsweise proportional zur Dauer der Öffnungszeiträume des Ventils. Wenn das Ventil geöffnet ist, fließt bevorzugt ein konstanter Volumenstrom an flüssigem Additiv durch das Ventil, welcher von verschiedenen Faktoren abhängt. Relevante Faktoren für den Volumenstrom sind beispielsweise der an dem Ventil anliegende Druck des flüssigen Additivs, die Viskosität des flüssigen Additivs und/oder der Querschnitt und/oder die Form des Strömungswegs des flüssigen Additivs durch das Dosierventil. Durch Öffnungsvorgänge und durch Schließvorgänge des Dosierventils, welche jeweils Öffnungszeiträume des Dosierventils einleiten bzw. beenden, kann es bei der Proportionalität zwischen den Öffnungszeiträumen und der Dosiermenge Unregelmäßigkeiten geben. Diese Unregelmäßigkeiten können gegebenenfalls durch Korrekturfaktoren reduziert bzw. ausgeglichen werden.

Wenn der Kalibrierkörper mit einer definierten Kraft in das Ventil eingesetzt ist, wird der Kalibrierkörper mit einer stoffschlüssigen Verbindung in dem Dosierventil befestigt. Eine stoffschlüssige Verbindung kann beispielsweise eine Lötverbindung oder eine Schweißverbindung sein. Bei einer Lötverbindung als stoffschlüssiger Verbindung wird die Verbindung durch ein zusätzliches Material (ein Lotmaterial) hergestellt, welches bei der Herstellung der Verbindung schmilzt und sich so sowohl mit dem Kalibrierkörper als auch mit dem Dosierventil verbindet. Bei einer Schweißverbindung als stoffschlüssige Verbindung, wird das Material des Dosierventils und/oder das Material des Kalibrierkörpers angeschmolzen und beim Erstarren des angeschmolzenen Materials, des Dosierventils und/oder des Kalibrierkörpers entsteht eine feste Verbindung. Die Verbindung kann unmittelbar zwischen dem Dosierventil und dem Kalibrierkörper hergestellt werden.

Das Material des Kalibrierkörpers und das Material des Dosierventils bzw. das Material des Ventilgehäuses im Bereich der stoffschlüssigen Verbindung ist vorzugsweise metallisch. Die Schweißverbindung ist vorzugsweise eine metallische Schweißverbindung, bei der ein metallisches Material des Kalibrierkörpers und ein metallisches Material des Ventilgehäuses miteinander verschmolzen sind. Die Schweißverbindung wird vorzugsweise unter der Einwirkung eines Schutzgases hergestellt, um während des Schweißvorgangs Sauerstoff von der Schweißstelle fern zu halten und eine besonders hohe Qualität der Schweißverbindung zu gewährleisten.

Besonders bevorzugt ist die Schweißverbindung punktförmig. Eine solche Schweißverbindung kann mit einem Punktschweißverfahren hergestellt werden. Es können auch mehrere punktförmige Schweißverbindungen zwischen dem Kalibrierkörper und dem Ventilgehäuse ausgebildet sein, die beispielsweise auf einer den (hülsenförmigen bzw. zylindrischen) Kalibrierkörper umlaufenden Umfangslinie verteilt sind. Punktförmige Schweißverbindungen können beispielsweise dadurch erzeugt werden, dass ein elektrischer Strom an einer punktförmigen Berührungsstelle von dem Kalibrierkörper in das Ventilgehäuse oder umgekehrt fließt. Durch den hohen elektrischen Widerstand an der Berührungsstelle wird die Berührungsstelle stark erhitzt. Hierdurch schmelzen das Material des Kalibrierkörpers und/oder das Material des Ventilgehäuses auf. Die aufgeschmolzenen Materialien können ineinander fließen und so die punktförmige Schweißverbindung ausbilden. Eine punktförmige Schweißverbindung ist zur Fixierung des Kalibrierkörpers in dem Ventilgehäuse besonders geeignet, weil die Herstellung einer solchen Schweißverbindung auf die erläuterte Art und Weise besonders einfach und gut in die Herstellung eines Dosierventils integriert werden kann.

Auch möglich ist, dass der Kalibrierkörper mit einem Reibschweißverfahren in dem Ventilgehäuse befestigt wird. Bei einem Reibschweißverfahren wird durch Reibung zwischen dem Kalibrierkörper und dem Ventilgehäuse Wärme erzeugt und das Material des Ventilgehäuses und/oder das Material des Kalibrierkörpers angeschmolzen, um eine stoffschlüssige Verbindung zwischen dem Kalibrierkörper und dem Ventilgehäuse auszubilden. Diese notwendige Reibung kann beispielsweise beim Einsetzen des Kalibrierkörpers in das Ventilgehäuse erzeugt werden. Es ist beispielsweise möglich, dass der Kalibrierkörper unter einer hochfrequenten Drehbewegung mit wechselnder Drehrichtung in eine Öffnung des Ventilgehäuses eingesetzt wird. Diese Drehbewegung kann jeweils für wenige Winkelgrad (beispielsweise 5°) erfolgen und anschließend die Drehrichtung ändern. Vorzugsweise hat der (hülsenförmige bzw. zylindrische) Kalibrierkörper zumindest einen hervorstehenden Kontaktpunkt und/oder zumindest eine hervorstehende Kontaktlinie, die beim Einsetzen des Kalibrierkörpers in das Ventilgehäuse einen definierten Kontakt zwischen dem Kalibrierkörper und dem Ventilgehäuse darstellen. Die Reibung zur Ausbildung der Reibschweißverbindung wirkt dann vorzugsweise an diesem Kontaktpunkt bzw. dieser Kontaktlinie. Vorzugsweise schmilzt auch das an dem Kontaktpunkt bzw. an der Kontaktlinie befindliche Material des Kalibrierkörpers, so dass die Reibschweißverbindung zumindest teilweise mit diesem Material ausgebildet wird. Mit diesem Verfahren lässt sich eine besonders feste Schweißverbindung zwischen dem Kalibrierkörper und dem Ventilgehäuse ausbilden. Das Reibschweißverfahren ist insbesondere geeignet, um eine umlaufende linienförmige Schweißverbindung zwischen dem Kalibrierkörper und dem Ventilgehäuse auszubilden.

Außerdem möglich ist, dass der Kallibrierkörper mit einem Ultraschallschweißverfahren in dem Ventilgehäuse befestigt wird. für das Ultraschallschweißverfahren werden an der Position der Schweißverbindung das Material der Kalibrierhülse und/oder das Material des Ventilgehäuses mit Hilfe von Ultraschallwellen erwärmt und angeschmolzen, um eine Schweißverbindung auszubilden. Die Ultraschallwellen können mit Hilfe eines piezoelektrische Aktors und/oder mit Hilfe eines magnetostriktiven Aktors erzeugt werden. Diese Aktoren können elektrischen Strom in eine hochfrequente Schallwelle umwandeln. Dieses Verfahren zur Ausbildung einer Schweißverbindung ist besonders schnell ausführbar, so dass es besonders gut in die Herstellung eines Dosierventils integriert werden kann.

Einfrierendes, flüssiges Additiv in dem Dosierventil kann auf die Komponenten des Dosierventils, welche an das flüssige Additiv angrenzen, sehr große Kräfte erzeugen. Insbesondere wasserbasierte flüssige Additive (wie beispielsweise Harnstoff-Wasser-Lösung) dehnen sich beim Einfrieren aus, wodurch sehr hohe Drücke entstehen können.

Es hat sich heraus gestellt, dass die Kalibrierhülse mit Hilfe einer stoffschlüssigen Verbindung in dem Ventilgehäuse so befestigt werden kann, dass keine dauerhafte Verschiebung oder Verformung der Kalibrierhülse durch auftretenden Eisdruck auftritt. Damit wird auch die von der Feder auf den Ventilkörper ausgeübte Federkraft nicht dauerhaft verändert.

Das Dosierventil kann außer dem Ventilkörper, der Feder und dem Kalibrierkörper noch weitere Bauteileile umfassen, wie beispielsweise eine Antriebseinheit, Dichtungen, usw.

Eine Antriebseinheit eines Dosierventils umfasst regelmäßig einen elektrischen Antrieb. Der Antrieb ist typischerweise in der Lage, auf den Ventilkörper eine Kraft auszuüben, welche zum Öffnen des Dosierventils gegen die Federkraft wirkt. Wenn die vom Antrieb auf den Ventilkörper ausgeübte Kraft die Federkraft übersteigt, bewegt sich der Ventilkörper und das Dosierventil öffnet. Der Ventilkörper gibt dann den Strömungsweg von dem zumindest einen Einlass zu dem zumindest einen Auslass des Dosierventils frei. Die von dem Antrieb auf den Ventilkörper ausgeübte Kraft ist normalerweise eine magnetische Kraft.

Der Ventilkörper weist daher vorzugsweise zumindest einen Abschnitt aus Metall auf, damit eine magnetische Kraft des Antriebs auf den Ventilkörper wirken kann.

Eine stoffschlüssige Verbindung ist mit verhältnismäßig geringem technischen Aufwand in die Fertigung eines Dosierventils zu integrieren, insbesondere wenn die stoffschlüssige Verbindung zusätzlich zu einer Pressverbindung zwischen dem Dosierventil und dem Kalibrierkörper ausgeführt wird. Es hat sich heraus gestellt, dass es wesentlich aufwändiger wäre eine stabilere Pressverbindung herzustellen, weil hierzu das gesamte Dosierventilgehäuse wesentlich stabiler ausgeführt sein müsste, um die höheren Kräfte der Pressverbindung dauerhaft aufnehmen zu können. Es hat sich als besonders vorteilhaft erwiesen, sowohl eine Pressverbindung als auch die beschriebene stoffschlüssige Verbindung zur Fixierung des Kalibrierkörpers zu verwenden, weil dann die Kräfte zum Halten des Kalibrierkörpers (auch bei Eisdruck) auf zwei verschiedene Verbindungen aufgeteilt werden und so auch ohne eine stabilere Ausführung des Dosierventils eine sichere Positionierung des Kalibrierkörpers gewährleistet werden kann.

Weiterhin vorteilhaft ist das Dosierventil, wenn der Kalibrierkörper zweiteilig ausgeführt ist. Dann kann der Kalibrierkörper aus einem Kalibrierteil, welches die Feder abstützt, und einem Abstützbauteil, welches das erste Kalibrierteil abstützt, bestehen, wobei die stoffschlüssige Verbindung (nur) an dem zweiten Kalibrierteil vorgesehen ist.

Durch eine solche Unterteilung des Kalibrierkörpers ist es möglich, dass ein Kalibrierteil unmittelbar an der Feder angeordnet ist. Dieses Kalibrierteil kann besonders bevorzugt auch mit einer Pressverbindung mit dem Dosierventil verbunden sein, indem dieses Kalibrierteil in einem Kanalabschnitt eingepresst bzw. verpresst ist. Das Abstützbauteil liegt vorzugsweise unmittelbar an dem Kalibrierteil an. Das Abstützbauteil kann ebenfalls eingepresst bzw. verpresst sein. Es ist aber auch möglich, dass das Abstützbauteil lediglich eine Distanz von dem ersten Kalibrierteil hin zu einer Öffnung überbrückt, durch welche das Kalibrierteil und das Abstützbauteil eingesetzt sind, damit eine stoffschlüssige Verbindung in der Nähe der Öffnung ausgebildet sein kann. Das Abstützbauteil kann die zusätzliche Funktion erfüllen, ein mit flüssigem Additiv gefülltes Innenvolumen des Dosierventils zu reduzieren.

Das Dosierventil ist außerdem vorteilhaft, wenn der Kalibrierkörper hülsenförmig ist und der Kanal einen Kanalabschnitt aufweist, in welchem der Kalibrierkörper positioniert werden kann, um so die Federkraft der Feder auf den Ventilkörper einzustellen.

Der Kanal ist vorzugsweise abschnittsweise zylindrisch geformt und hat bevorzugt eine kreisförmige Querschnittsfläche. Der hülsenförmige Kalibrierkörper ist an die zylindrische Form des Kanals vorzugsweise derart angepasst, dass der Kalibrierkörper an der Wandung des Kanals anliegt, so dass flüssiges Additiv nicht zwischen dem Kalibrierkörper und der Wand des Kanals hindurchfließt, sondern sich ein Strömungsweg für das flüssige Additiv durch den hülsenförmigen Kalibrierkörper hindurch erstreckt. Der Kalibrierkörper weist vorzugsweise einen (stirnseitigen) Abstützabschnitt auf, an welchem sich die Feder abstützt. Die Federkraft der Feder, welche auf den Ventilkörper wirkt, wirkt vorzugsweise an dem dem Ventilkörper gegenüberliegenden Ende der Feder auf den Kalibrierkörper. Die Feder ist zwischen dem Ventilkörper und dem Kalibrierkörper verspannt. Der Kanalabschnitt, welcher vorzugsweise zylindrisch geformt ist, damit der Kalibrierkörper darin positioniert werden kann, ist vorzugsweise etwas länger ausgestaltet als der Kalibrierkörper, damit die Position des Kalibrierkörpers in dem Kanalabschnitt in einem Bereich variiert werden kann, um die weiter oben beschriebenen Fertigungstoleranzen der Feder auszugleichen. Bei der weiter oben beschriebenen zweiteiligen Ausführungsvariante mit Kalibrierteil und Abstützbauteil ist es möglich, dass das Kalibrierteil und/oder das Abstützbauteil hülsenförmig ausgeführt sind. Das Kalibrierteil ist dann eine Kalibrierhülse und das Abstützbauteil ist dann eine Abstützhülse.

Das Dosierventil ist auch vorteilhaft, wenn der Ventilkörper in der Ruhestellung an einem Schließsitz anliegt, das Dosierventil in der Ruhestellung geschlossen ist und der Ventilkörper zum Öffnen des Dosierventils entgegen der Federkraft von dem Schließsitz weg bewegbar ist.

Der Schließsitz bildet vorzugsweise die Stelle des Dosierventils bzw. des Ventilgehäuses, an welchem der Ventilkörper in der Ruhestellung anliegt. Der Ventilkörper und der Schließsitz zusammen unterbrechen vorzugsweise den Strömungsweg durch das Dosierventil von dem Einlass zu dem Auslass, wenn der Ventilkörper an dem Schließsitz anliegt. In der Ruhestellung ist das Dosierventil vorzugsweise geschlossen.

In einer anderen Ausführungsvariante des Dosierventils ist es auch möglich, dass der Ventilkörper in der Ruhestellung an einem Anschlag anliegt und das Dosierventil geöffnet ist, während das Dosierventil geschlossen ist, wenn der Ventilkörper entgegen der Federkraft von dem Anschlag weg bewegt ist. Der Anschlag ist dann zugleich der Schließsitz.

Der Kalibrierkörper ist (wie bereits weiter oben beschrieben) vorzugsweise in einem Kanalabschnitt eines Kanals in dem Dosierventil positioniert. Der Kalibrierkörper, welcher vorzugsweise hülsenförmig ist, ist vorzugsweise in radialer Richtung verformbar. So kann der Kalibrierkörper zunächst in dem Kanalabschnitt positioniert werden und dann in radialer Richtung ausgedehnt werden, um gegen eine Wandung des Kanals gepresst zu werden. Eine solche Verformung verändert vorzugsweise nicht die Positionierung des Kalibrierkörpers in axialer Richtung (entlang des Kanals), durch welche die auf die Feder vom dem Kalibrierkörper ausgeübte Federkraft beeinflusst wird.

Wenn zusätzlich zu der stoffschlüssigen Verbindung eine Pressverbindung ausgebildet ist, um den Kalibrierkörper in dem Ventilgehäuse zu befestigen kann in besonders vorteilhafter Weise auch eine Punktförmige Schweißverbindung zu Fixierung des Kalibrierkörpers ausgeführt werden. Bei der Ausbildung der Pressverbindung kann der Kalibrierkörper zumindest lokal verformt werden, so dass sich zumindest ein punktförmiger Bereich ausbildet, in dem der Kalibrierkörper besonders fest an dem Ventilgehäuse anliegt. Dieser punktförmige Bereich kann in besonders vorteilhafter Weise genutzt werden, um einen Strom von dem Kalibrierkörper in das Ventilgehäuse oder umgekehrt zu leiten, um eine punktförmige Scheißverbindung auszubilden.

Weiterhin vorteilhaft ist das Dosierventil, wenn das Dosierventil eine Öffnung aufweist, durch welche das zu dosierende Fluid in das Dosierventil gelangen kann, weiter sich der Kalibrierkörper ausgehend von der Feder bis hin zu der Öffnung erstreckt, und die stoffschlüssige Verbindung an einem an der Öffnung angeordnetem Ende des Kalibrierkörpers angeordnet ist.

Die beschriebene Öffnung stellt vorzugsweise gleichzeitig den Einlass für das flüssige Additiv in das Dosierventil dar. Außerdem stellt die Öffnung vorzugsweise gleichzeitig einen Eingang in den Kanal durch das Dosierventil dar, in welchem der Kanalabschnitt angeordnet ist, in dem der Kalibrierkörper platziert werden kann. Dadurch, dass der Kalibrierkörper sich von der Feder bis hin zu der Öffnung erstreckt, wird es ermöglicht, dass die stoffschlüssige Verbindung unmittelbar an dem, an der Öffnung angeordneten, Ende des Kalibrierkörpers vorgesehen werden kann. So ist die Position der stoffschlüssigen Verbindung leicht zugänglich und die stoffschlüssige Verbindung ist mit geringem Aufwand herzustellen. Hierbei ist zu bedenken, dass die Öffnung des Dosierventils, welche den Einlass darstellt und in welche der Kalibrierkörper vorzugsweise eingesetzt ist, einen relativ kleinen Querschnitt hat. Wenn der Kalibrierkörper sich bis zu der Öffnung erstreckt, ist es nicht notwendig, dass ein Werkzeug zur Herstellung der stoffschlüssigen Verbindung tief in den Kanal eindringt. Beispielsweise kann die stoffschlüssige Verbindung in einem Abstand von weniger als 5 mm [Millimeter], bevorzugt sogar weniger als 2 mm, zu der Öffnung angeordnet sein.

Weiter wird ein Dosierventil vorgeschlagen, zumindest aufweisend ein Ventilgehäuse mit einem Kanal und einem Ventilkörper, der beweglich ist, um das Dosierventil zu öffnen und zu schließen und eine Feder, welche eine Federkraft auf den Ventilkörper ausübt und den Ventilkörper so in einer Ruhestellung hält, wobei die Feder an einem Kalibrierkörper abgestützt ist, der Ventilkörper, die Feder und der Kalibrierkörper in dem Kanal angeordnet sind und der Kalibrier körper in das Ventilgehäuse mit einer Schraubverbindung eingeschraubt ist.

Die Schraubverbindung stellt eine nicht zur Erfindung gehörende Alternative zur weiter oben beschriebenen stoffschlüssigen Verbindung dar, um den Kalibrierkörper zu fixieren. Der Einsatz des Kalibrierkörpers mit einer Schraubverbindung ermöglicht ebenfalls eine sehr feste Verbindung zwischen dem Kalibrierkörper und dem Dosierventil, welche in der Lage ist, durch Einfrieren des flüssigen Additivs in dem Dosierventil nicht beeinflusst zu werden. Damit eine Schraubverbindung zwischen dem Dosierventil und dem Kalibrierkörper ausgebildet werden kann, weist das Dosierventil bzw. das Ventilgehäuse einen Kanal mit einem Kanalabschnitt auf, der ein Gewinde hat, in welches der Kalibrierkörper eingeschraubt werden kann.

Die weiter oben für das Dosierventil mit einer stoffschlüssig befestigten Kalibrierhülse geschilderten besonderen Vorteile und Ausgestaltungsmerkmale sind in entsprechender Weise auf das Dosierventil mit der mit einer Schraubverbindung befestigten Kalibrierhülse übertragbar und anwendbar, soweit dies technisch sinnvoll ist.
Im Rahmen der Erfindung auch beansprucht, wird ein Verfahren zum Herstellen eines Dosierventils, aufweisend zumindest die folgenden Schritte:
a) Bereitstellen eines Ventilgehäuses mit einem Kanal;
b.1) Einsetzen eines Ventilkörpers in den Kanal des Ventilgehäuses;
b.2) Einsetzen einer Feder in den Kanal des Ventilgehäuses;
b.3) Einsetzen eines Kalibrierkörpers in den Kanal des Ventilgehäuses;
c) Spannen der Feder, so dass die Feder auf den Ventilkörper eine vordefinierte Kraft ausübt; und
d) Befestigen der Kalibrierkörper in dem Ventilgehäuse über eine Pressverbindung (10) vor dem Herstellen zumindest einer stoffschlüssigen Verbindung (5) zwischen dem Kalibrierkörper (4) und dem Ventilgehäuse (6).

Das beschriebene Verfahren ist insbesondere geeignet um ein weiter oben beschriebenes Dosierventil herzustellen, dessen Kalibrierkörper mit einer stoffschlüssigen Verbindung befestigt ist.

In Schritt a) wird (vorzugsweise) ein Ventilgehäuse bereitgestellt, welches einen Kanal aufweist, welcher sich von einem Einlass für das flüssige Additiv zu einem Auslass für das flüssige Additiv erstreckt. Dieser Kanal ist in Schritt a) vorzugsweise von dem Einlass zu dem Auslass durchlässig. In Schritt b.1) wird der Ventilkörper vorzugsweise durch eine Öffnung in den beschriebenen Kanal in dem Ventilgehäuse eingesetzt. In Schritt b.2) wird zusätzlich in diesen Kanal eine Feder derart eingesetzt, dass sie in Kontakt mit dem Ventilkörper steht. Anschließend wird in Schritt b.3) der Kalibrierkörper in diesen Kanal derart eingesetzt, dass die Feder in Kontakt mit dem Kalibrierkörper steht. Die Feder befindet sich nach Schritt b.3) zwischen dem Ventilkörper und dem Kalibrierkörper.

Zum Spannen der Feder in Schritt c) wird vorzugsweise ein Werkzeug mit einer definierten Kraft in den beschriebenen Kanal eingeschoben, wobeidas Werkzeug die vordefinierte Kraft auf den Kalibrierkörper ausübt. Durch die Feder positioniert sich dann der Kalibrierkörper so, dass diese

Kraft auch auf die Feder weitergegeben wird. Anschließend wird in Schritt d) in der Position, in welcher sich der Kalibrierkörper in Schritt c) positioniert hat, eine stoffschlüssige Verbindung zwischen dem Kalibrierkörper und dem Ventilgehäuse ausgebildet.

Durch das erfindungsgemäße Verfahren kann besonders einfach und kostengünstig ein erfindungsgemäßes Dosierventil hergestellt werden. Die beschriebenen Vorteile und besonderen Ausgestaltungsmerkmale für das Dosierventil sind auf das Verfahren zur Herstellung eines Dosierventils übertragbar und anwendbar. Gleiches gilt für die für das Verfahren geschilderten besonderen Vorteile und Ausgestaltungsmerkmale, welche auf das Dosierventil anwendbar und übertragbar sind.

Der Kalibrierkörper wird vor Schritt d) in dem Ventilgehäuse eingepresst. Vorzugsweise ist die Pressung des Kalibrierkörpers so stark, dass der Kalibrierkörper die Feder unter den vor der Durchführung von Schritt d) vorliegenden Bedingungen bereits in der vorgegebenen Position hält. Die in Schritt d) ausgebildete, stoffschlüssige Verbindung ist dann notwendig, um den Kalibrierkörper so zu befestigen, dass er auch unter Einsatzbedingungen und insbesondere bei Einfrieren des flüssigen Additivs in dem Dosierventil und bei Eisdruck seine Position nichtverändert. Durch das zusätzliche Einpressen des Kalibrierkörpers in das Dosierventil kann erreicht werden, dass das für Schritt c) verwendete Werkzeug zum Spannen der Feder vor Schritt d) bereits wegbewegt werden kann, und die stoffschlüssige Verbindung mit einem anderen Werkzeug hergestellt werden kann. Das für Schritt c) verwendete Werkzeug ist vorzugsweise so ausgebildet, dass es die beschriebene Einpressung des Kalibrierkörper in dem Ventilgehäuse bzw. in den Kanal in dem Ventilgehäuse vornehmen kann, nachdem es die Positionierung des Kalibrierkörpers mit der vordefinierten Kraft ausgeführt hat.

Im Rahmen der Erfindung wird auch ein Kraftfahrzeug vorgeschlagen, zumindest aufweisend eine Verbrennungskraftmaschine, eine Abgasbehandlungsvorrichtung zur Reinigung der Abgase der Verbrennungskraftmaschine und eine Zufuhrvorrichtung zur Zufuhr eines Additivs in die Abgasbehandlungsvorrichtung mit einem erfindungsgemäßen Dosierventil.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante eines Dosierventils in geschlossenem Zustand,
- Fig. 2:: die erste Ausführungsvariante eines Dosierventils in geöffnetem Zustand,
- Fig. 3:: eine zweite Ausführungsvariante eines Dosierventils,
- Fig. 4:: eine nicht zur Erfindung gehörende Ausführungsvariante eines Dosierventils,
- Fig. 5:: eine Zufuhrvorrichtung aufweisend ein Dosierventil und
- Fig. 6:: ein Kraftfahrzeug aufweisend ein Dosierventil.

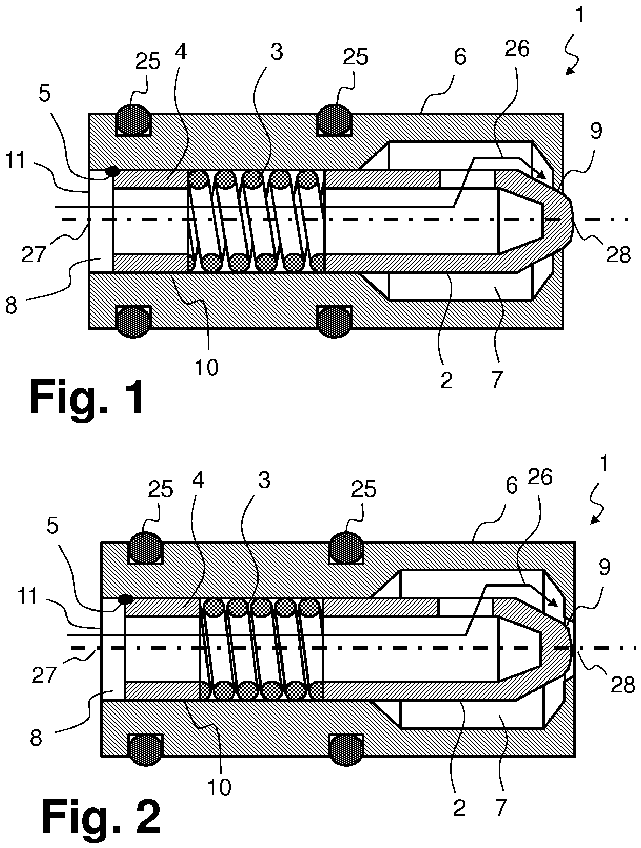

In den Fig. 1 bis 4 stimmen viele Bauteile überein, so dass diese Figuren hier zunächst gemeinsam erläutert werden, um hinterher auf die Unterschiede zwischen den einzelnen Ausführungsvarianten in den Figuren einzugehen. Die Fig. 1 bis 4 zeigen jeweils ein Dosierventil 1 aufweisend ein Ventilgehäuse 6, durch welches ein Kanal 7 verläuft. In dem Kanal 7 ist ein Ventilkörper 2 angeordnet. Der Ventilkörper 2 ist mit einer Feder 3 in dem Dosierventil 1 bzw. in dem Ventilgehäuse 6 bzw. in dem Kanal 7 verspannt. Dazu ist die Feder 3 gegen einen Kalibrierkörper 4 abgestützt. Der Kalibrierkörper 4, die Feder 3 und der Ventilkörper 2 sind durch eine Öffnung 11 des Kanals 7 hindurch in das Ventilgehäuse 6 eingesetzt. Der Kalibrierkörper 4 befindet sich dabei in einem Kanalabschnitt 8 des Kanals 7. Die Feder 3 übt auf den Ventilkörper 2 eine definierte Kraft aus, welche den Ventilkörper 2 gegen einen Schließsitz 9 drückt, und das Dosierventil 1 so verschließt. Der Ventilkörper 2 kann mit einem nicht dargestellten Antrieb entgegen der von der Feder 3 ausgeübten Federkraft bewegt werden, um den Ventilkörper 2 von dem Schließsitz 9 wegzugeben und so einen Strömungsweg 26 durch das Dosierventil 1 von einem Einlass 27 zu einem Auslass 28 freizugeben und das Dosierventil 1 so zu öffnen. Das Dosierventil 1 bzw. das Ventilgehäuse 6 des Dosierventils 1 weist vorzugsweise an einer Außenfläche Dichtungen 25 auf, mit welcher das Dosierventil 1 fluiddicht in eine Zufuhrvorrichtung eingesetzt werden kann, mit welcher flüssiges Additiv in eine Abgasbehandlungsvorrichtung zugeführt werden kann. In einer solchen Zufuhrvorrichtung übernimmt das Dosierventil 1 die Aufgabe, die von der Zufuhrvorrichtung zugeführte Menge an flüssigem Additiv einzustellen.

Bei der Ausführungsvariante des Dosierventils 1 gemäß Fig. 1 und 2 ist der Kalibrierkörper 4 mit einer stoffschlüssigen Verbindung 5 in einem Kanalabschnitt 8 des Kanals 7 befestigt. Die Fig. 1 zeigt diese Ausführungsvariante des Dosierventils 1 in geschlossenem Zustand. Hierbei ist der Strömungsweg 26 von dem Einlass 27 zu dem Auslass 28 unterbrochen. Die Fig. 2 zeigt diese Ausführungsvariante in geöffnetem Zustand. Der Strömungsweg 26 von dem Einlass 27 zu dem Auslass 28 ist hergestellt und flüssiges Additiv kann von dem Einlass 27 zu dem Auslass 28 fließen und danach austreten.

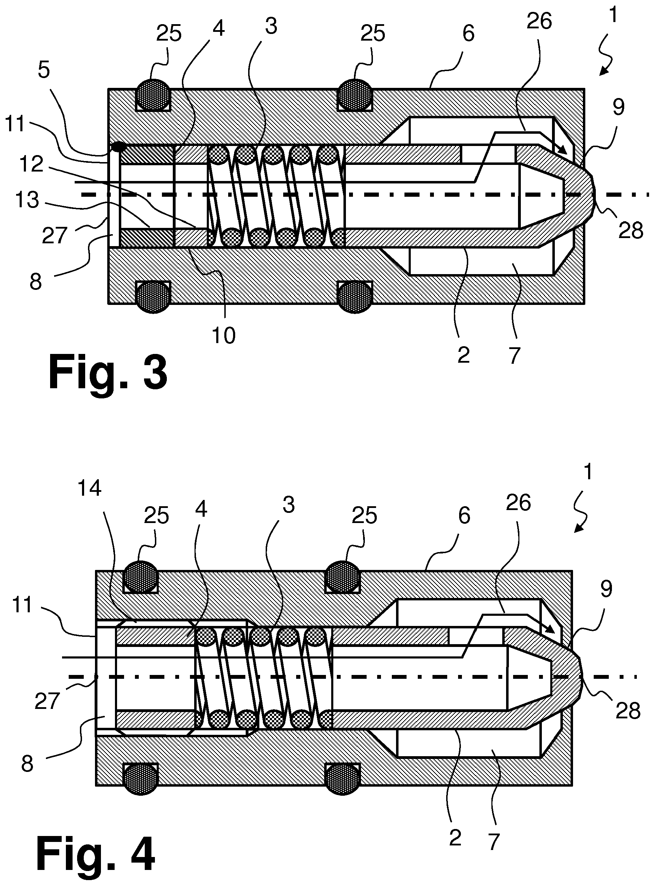

Bei der Ausführungsvariante des Dosierventils 1 gemäß Fig. 3 ist der Kalibrierkörper 4 in ein Kalibrierteil 12 und in ein Abstützbauteil 13 unterteilt. Das Kalibrierteil 12 stützt die Feder 3 ab. Das Abstützbauteil 13 stützt wiederum das Kalibrierteil 12 ab. Die stoffschlüssige Verbindung 5 ist an dem Abstützbauteil 13 ausgebildet. Dadurch ist die stoffschlüssige Verbindung 5 in der Nähe der Öffnung 11 angeordnet. Ein Werkzeug zur Ausbildung der stoffschlüssigen Verbindung 5 muss daher nicht sehr tief in den Kanal 7 eindringen, sondern kann in der Nähe der Öffnung 11 verbleiben.

Bei der nicht erfinderische Ausführungsvariante gemäß Fig. 4 ist der Kanalabschnitt 8 mit einem Gewinde ausgebildet und der Kalibrierkörper 4 ist mit einer Schraubverbindung 14 in das Gewinde des Kanalabschnitts 8 eingesetzt. Durch eine Drehung des Kalibrierkörpers 4 verändert dieser seine Position in Bezug auf die Feder 3, so dass die Federkraft durch eine Verdrehung bzw. ein Einschrauben des Kalibrierkörpers 4 in die Schraubverbindung 14 definiert werden kann.

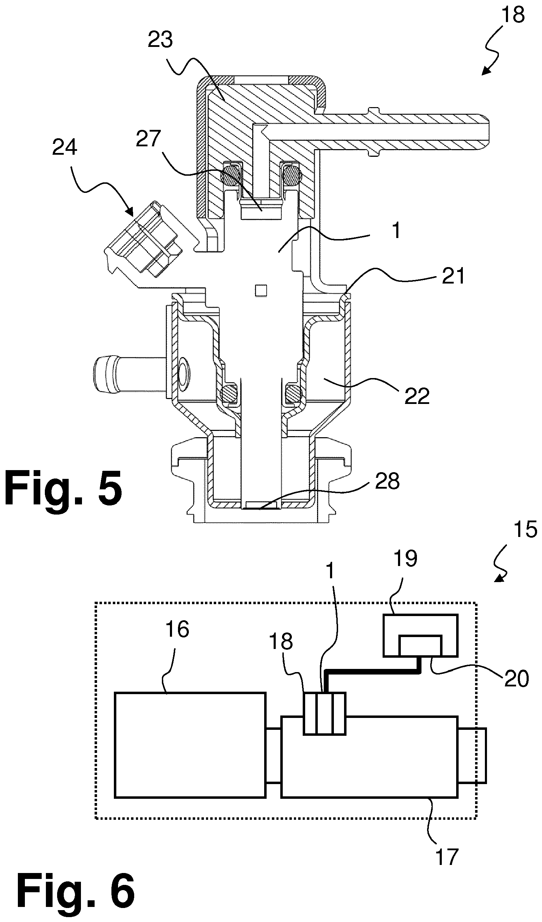

Fig. 5 zeigt eine Zufuhrvorrichtung 18, in welcher ein Dosierventil 1 eingesetzt ist. Die Zufuhrvorrichtung 18 weist eine Ventilhalterung 21 auf, in welche das Dosierventil 1 eingesetzt ist. Das Dosierventil 1 ist von einer Flüssigkühlung 22 umgeben. Diese Flüssigkühlung 22 ist rein optional. Eine Zufuhrvorrichtung 18 für ein beschriebenes Dosierventil 1 kann auch ohne Flüssigkühlung 22 ausgeführt sein. Die Flüssigkühlung 22 kann in Form eines Kühlkanals ausgebildet sein, durch welchen ein Kühlmedium fliest, welches das Dosierventil 1 im Betrieb kühlt. Das Kühlmedium kann beispielsweise die Kühlflüssigkeit einer Verbrennungskraftmaschine sein, wobei die Flüssigkühlung 22 dann an den Kühlkreislauf der Verbrennungskraftmaschine angeschlossen ist. In Fig. 5 auch zu erkennen ist ein elektrischer Anschluss 24 des Dosierventils 1, über welchen ein hier nicht dargestellter Antrieb des Dosierventils 1 angesteuert werden kann. Das Dosierventil 1 weist zudem einen Einlass 27 und einen Auslass 28 auf. An den Auslass 28 ist ein Anschlussbauteil 23 angeschlossen, welches eine Fluidverbindung für das flüssige Additiv zu dem Einlass 27 des Dosierventils 1 herstellt.

Fig. 6 zeigt ein Kraftfahrzeug 15, aufweisend eine Verbrennungskraftmaschine 16 und eine Abgasbehandlungsvorrichtung 17 zur Reinigung der Abgase der Verbrennungskraftmaschine 16. Das Kraftfahrzeug 15 weist auch einen Tank 19 auf, in welchem flüssiges Additiv (beispielsweise Harnstoff-Wasser-Lösung) gespeichert ist. Das flüssige Additiv aus dem Tank 19 kann mit einer Fördereinheit 20 (z. B. einer Pumpe) zu einer Zufuhrvorrichtung 18 gefördert werden. In der Zufuhrvorrichtung 18 ist ein Dosierventil 1 vorgesehen, mit welchem das flüssige Additiv der Abgasbehandlungsvorrichtung 17 zugeführt werden kann.

### Bezugszeichenliste

- 1: Dosierventil
- 2: Ventilkörper
- 3: Feder
- 4: Kalibrierkörper
- 5: stoff schlüssige Verbindung
- 6: Ventilgehäuse
- 7: Kanal
- 8: Kanalabschnitt
- 9: Schließsitz
- 10: Pressverbindung
- 11: Öffnung
- 12: Kalibrierteil
- 13: Abstützbauteil
- 14: Schraubverbindung
- 15: Kraftfahrzeug
- 16: Verbrennungskraftmaschine
- 17: Abgasbehandlungsvorrichtung
- 18: Zufuhrvorrichtung
- 19: Tank
- 20: Fördereinheit
- 21: Ventilhalterung
- 22: Flüssigkühlung
- 23: Anschlussbauteil
- 24: elektrischer Anschluss
- 25: Dichtung
- 26: Strömungsweg
- 27: Einlass
- 28: Auslass

## Patentansprüche

1. Verfahren zum Herstellen eines Reduktionsmitteldosierventils (1) für eine Abgashandlungsvorrichtung, aufweisend zumindest die folgenden Schritte:
a) Bereitstellen eines Ventilgehäuses (6) mit einem Kanal (7);
b.1) Einsetzen eines Ventilkörpers (2) in den Kanal (7) des Ventilgehäuses (6);
b.2) Einsetzen einer Feder (3) in den Kanal (7) des Ventilgehäuses (6);
b.3) Einsetzen eines Kalibrierkörpers (4) in den Kanal (7) des Ventilgehäuses (6);
c) Spannen der Feder (3), so dass die Feder (3) auf den Ventilkörper (2) eine vordefinierte Kraft ausübt; und
d) Befestigen der Kalibierkörper in dem Ventilgehäuse über eine Pressverbindung (10) vor dem Herstellen zumindest einer stoffschlüssigen Verbindung (5) zwischen dem Kalibrierkörper (4) und dem Ventilgehäuse (6).

2. Reduktionsmitteldosierventil (1) für eine Abgasbehandlungsvorrichtung, zumindest aufweisend ein Ventilgehäuse (6), mit einem Kanal (7) und einem Ventilkörper (2), der beweglich ist, um das Dosierventil (1) zu öffnen und zu schließen und eine Feder (3), welche eine Federkraft auf den Ventilkörper (2) ausübt und den Ventilkörper (2) so in einer Ruhestellung hält, wobei die Feder (3) an mindestens einem Kalibrierkörper (4) abgestützt ist, der Ventilkörper (2), die Feder (3) und der mindestens eine Kalibrierkörper (4) in dem Kanal (7) angeordnet sind, **dadurch gekennzeichnet, dass** der mindestens eine Kalibrierkörper (4) zumindest mit einer stoffschlüssigen Verbindung (5) und zusätzlich zu der stoffschlüssigen Verbindung (5) über eine Pressverbindung in dem Ventilgehäuse (6) befestigt ist.

3. Dosierventil (1) nach Patentanspruch 2, wobei der Kalibrierkörper (4) zweiteilig ausgeführt ist und aus einem Kalibrierteil (12), welches die Feder (3) abstützt, und einem Abstützteil (13), welches das Kalibrierteil (12) abstützt, besteht, wobei die stoffschlüssige Verbindung (5) an dem Abstützteil (13) vorgesehen ist.

4. Dosierventil (1) nach einem der Patentansprüche 2 bis 3, wobei der Kalibrierkörper (4) hülsenförmig ist, und der Kanal (7) einen Kanalabschnitt (8) aufweist, in welchem der Kalibrier körper (4) positioniert werden kann, um so die Federkraft der Feder (3) auf den Ventilkörper (2) einzustellen.

5. Dosierventil (1) nach einem der Patentansprüche 2 bis 4, wobei der Ventilkörper (2) in der Ruhestellung an einem Schließsitz (9) anliegt und das Dosierventil (1) in der Ruhestellung geschlossen ist, und der Ventilkörper (2) zum Öffnen des Dosierventils (1) entgegen der Federkraft von dem Schließsitz (9) weg bewegbar ist.

6. Dosierventil (1) nach einem der Patentansprüche 2 bis 5, wobei das Dosierventil (1) eine Öffnung (11) aufweist, durch welche das zu dosierende Fluid in das Dosierventil (1) gelangen kann, weiterhin sich der Kalibrierkörper (4) ausgehend von der Feder (3) bis hin zu der Öffnung (11) erstreckt, und die stoffschlüssige Verbindung (5) an einem an der Öffnung (11) angeordnetem Ende des Kalibrierkörpers (4) angeordnet ist.

7. Kraftfahrzeug (15), zumindest aufweisend eine Verbrennungskraftmaschine (16), eine Abgasbehandlungsvorrichtung (17) zur Reinigung der Abgase der Verbrennungskraftmaschine (16), eine Zufuhrvorrichtung (18) zur Zufuhr eines Additivs in die Abgasbehandlungsvorrichtung (17) mit einem Dosierventil (1) nach einem der Patentansprüche 2 bis 6.

## Claims

1. Method for producing a reducing agent dosing valve (1) for an exhaust-gas treatment device, having at least the following steps:
a) providing a valve housing (6) having a duct (7);
b.1) inserting a valve body (2) into the duct (7) of the valve housing (6);
b.2) inserting a spring (3) into the duct (7) of the valve housing (6);
b.3) inserting a calibration body (4) into the duct (7) of the valve housing (6);
c) stressing the spring (3) such that the spring exerts a predefined force on the valve body (2); and
d) fastening the calibration body in the valve housing by means of a press-fit connection (10) before producing at least one cohesive connection (5) between the calibration body (4) and the valve housing (6).

2. Reducing agent dosing valve (1) for an exhaust-gas treatment device, at least having a valve housing (6), with a duct (7) and with a valve body (2) which is movable so as to open and close the dosing valve (1), and having a spring (3) which exerts a spring force on the valve body (2) and thus holds the valve body (2) in a rest position, wherein the spring (3) is supported on at least one calibration body (4), the valve body (2), the spring (3) and the at least one calibration body (4) are arranged in the duct (7), **characterized in that** the at least one calibration body (4) is fastened in the valve housing (6) at least by means of a cohesive connection (5) and not only by means of the cohesive connection (5) but also by means of a press fit connection.

3. Dosing valve (1) according to Patent Claim 2, wherein the calibration body (4) is of two-part form and is composed of a calibration part (12), which supports the spring (3), and a support part (13), which supports the calibration part (12), wherein the cohesive connection (5) is provided on the support part (13).

4. Dosing valve (1) according to one of Patent Claims 2 to 3, wherein the calibration body (4) is of sleeve-shaped form, and the duct (7) has a duct section (8) in which the calibration body (4) can be positioned in order thereby to set the spring force exerted on the valve body (2) by the spring (3).

5. Dosing valve (1) according to one of Patent Claims 2 to 4, wherein the valve body (2) bears against a closing seat (9) when in the rest position and the dosing valve (1) is closed in the rest position, and in order to open the dosing valve (1), the valve body (2) can be moved away from the closing seat (9) counter to the spring force.

6. Dosing valve (1) according to one of Patent Claims 2 to 5, wherein the dosing valve (1) has an opening (11) through which the fluid to be dosed can pass into the dosing valve (1), the calibration body (4) furthermore extends from the spring (3) to the opening (11), and the cohesive connection (5) is arranged at an end, arranged at the opening (11), of the calibration body (4).

7. Motor vehicle (15), at least having an internal combustion engine (16), an exhaust-gas treatment device (17) for purifying the exhaust gases of the internal combustion engine (16), and a feed device (18) for feeding an additive into the exhaust-gas treatment device (17), said feed device having a dosing valve (1) according to one of Patent Claims 2 to 6.

## Revendications

1. Procédé de fabrication d'une soupape de dosage d'agent réducteur (1) pour un dispositif de traitement de gaz d'échappement, présentant au moins les étapes suivantes :
a) fourniture d'un boîtier de soupape (6) comprenant un canal (7) ;
b.1) insertion d'un corps de soupape (2) dans le canal (7) du boîtier de soupape (6) ;
b.2) insertion d'un ressort (3) dans le canal (7) du boîtier de soupape (6) ;
b.3) insertion d'un corps d'étalonnage (4) dans le canal (7) du boîtier de soupape (6) ;
c) mise sous tension du ressort (3) de telle sorte que le ressort (3) exerce sur le corps de soupape (2) une force prédéfinie ; et
d) fixation du corps d'étalonnage dans le boîtier de soupape par le biais d'un assemblage par pressage (10) avant l'établissement d'au moins une connexion par liaison de matière (5) entre le corps d'étalonnage (4) et le boîtier de soupape (6).

2. Soupape de dosage d'agent réducteur (1) pour un dispositif de traitement de gaz d'échappement, présentant au moins un boîtier de soupape (6), avec un canal (7) et un corps de soupape (2) qui est déplaçable, afin d'ouvrir et de fermer la soupape de dosage (1) et un ressort (3) qui exerce une force de ressort sur le corps de soupape (2) et qui retient ainsi le corps de soupape (2) dans une position de repos, le ressort (3) étant supporté sur au moins un corps d'étalonnage (4), le corps de soupape (2), le ressort (3) et l'au moins un corps d'étalonnage (4) étant disposés dans le canal (7), **caractérisée en ce que** l'au moins un corps d'étalonnage (4) est fixé dans le boîtier de soupape (6) au moins par une connexion par liaison de matière (5) et en plus de la connexion par liaison de matière (5), par le biais d'un ajustement serré.

3. Soupape de dosage (1) selon la revendication 2, dans laquelle le corps d'étalonnage (4) est réalisé en deux parties et se compose d'une partie d'étalonnage (12) qui supporte le ressort (3) et d'une partie de support (13) qui supporte la partie d'étalonnage (12), la connexion par liaison de matière (5) étant prévue sur la partie de support (13).

4. Soupape de dosage (1) selon l'une quelconque des revendications 2 à 3, dans laquelle le corps d'étalonnage (4) est en forme de douille et le canal (7) présente une portion de canal (8) dans laquelle peut être positionné le corps d'étalonnage (4) afin d'ajuster la force de ressort du ressort (3) sur le corps de soupape (2).

5. Soupape de dosage (1) selon l'une quelconque des revendications 2 à 4, dans lequel le corps de soupape (2), dans la position de repos, s'applique contre un siège de fermeture (9) et la soupape de dosage (1), dans la position de repos, est fermée, et le corps de soupape (2) peut être déplacé à l'encontre de la force de ressort à l'écart du siège de fermeture (9) pour ouvrir la soupape de dosage (1).

6. Soupape de dosage (1) selon l'une quelconque des revendications 2 à 5, dans laquelle la soupape de dosage (1) présente une ouverture (11) à travers laquelle le fluide à doser peut parvenir dans la soupape de dosage (1), et en outre dans laquelle le corps d'étalonnage (4) s'étend jusqu'à l'ouverture (11) à partir du ressort (3), et la connexion par liaison de matière (5) est disposée au niveau d'une extrémité du corps d'étalonnage (4) disposée au niveau de l'ouverture (11).

7. Véhicule automobile (15) présentant au moins un moteur à combustion interne (16), un dispositif de traitement de gaz d'échappement (17) pour purifier les gaz d'échappement du moteur à combustion interne (16), un dispositif d'alimentation (18) pour l'alimentation d'un additif dans le dispositif de traitement de gaz d'échappement (17), comprenant une soupape de dosage (1) selon l'une quelconque des revendications 2 à 6.
